# EUROPEAN PATENT APPLICATION

(11) **EP 4 156 215 A1**
(43) Date of publication of application: **29.03.2023**
(21) Application number: 21808893.8
(22) Date of filing: 07.05.2021
(51) Int. Cl.: H01G 4/30

(54) **CAPACITOR**

(30) Priority: 19.05.2020 JP 2020087715
(71) Applicant: Kyocera Corporation, Kyoto-shi, Kyoto 612-8501 (JP)
(72) Inventor: FUJIKAWA, Nobuyoshi, Kyoto-shi, Kyoto 612-8501 (JP); MATSUBARA, Kiyoshi, Kyoto-shi, Kyoto 612-8501 (JP)
(74) Representative: Viering, Jentschura & Partner mbB Patent- und Rechtsanwälte
(86) International application number: PCT/JP2021/017470
(87) International publication number: WO 2021/235238

(57) **Abstract**

A capacitor includes a stack and an external electrode located on a surface of the stack. The stack includes dielectric layers and internal electrode layers alternately stacked on one another. The stack further includes intermediate layers each between a dielectric layer and an internal electrode layer. The intermediate layers contain a dielectric component of the dielectric layers and a conductive component of the internal electrode layers. Each intermediate layer has a concentration gradient in which a concentration of the conductive component decreases from a portion adjacent to the internal electrode layer to a portion adjacent to the dielectric layer.

## Description

### TECHNICAL FIELD

The present disclosure relates to a stacked capacitor.

### BACKGROUND OF INVENTION

A known technique is described in, for example, Patent Literature 1.

### CITATION LIST

### PATENT LITERATURE

Patent Literature 1: Japanese Unexamined Patent Application Publication No. 10-4027

### SUMMARY

In one or more aspects of the present disclosure, a capacitor includes a stack including a dielectric layer and an internal electrode layer alternately stacked on each other, and an external electrode located on a surface of the stack and electrically connected to the internal electrode layer. The stack further includes an intermediate layer between the dielectric layer and the internal electrode layer. The intermediate layer contains a dielectric component of the dielectric layer and a conductive component of the internal electrode layer. The intermediate layer has a concentration gradient in which a concentration of the conductive component decreases from a portion adjacent to the internal electrode layer to a portion adjacent to the dielectric layer.

### BRIEF DESCRIPTION OF THE DRAWINGS

The objects, features, and advantages of the present disclosure will become more apparent from the following detailed description and the drawings.
FIG. 1 is an external perspective view of a capacitor.
FIG. 2 is a cross-sectional view taken along the section line in FIG. 1.
FIG. 3 is an enlarged schematic cross-sectional view of a stack.
FIG. 4A is a graph showing changes in the nickel concentrations of intermediate layers in a comparative example.
FIG. 4B is a graph showing changes in the nickel concentrations of intermediate layers in example 2.

### DESCRIPTION OF EMBODIMENTS

A capacitor with the structure that forms the basis of a capacitor according to one or more embodiments of the present disclosure is an electric component included in an electronic device. The capacitor is to have higher capacitance and improvements to its various characteristics.

For example, a stacked ceramic capacitor described in Patent Literature 1 contains an internal electrode material diffused into a ceramic body. The distance by which the internal electrode material diffuses is 3 to 30% of the distance between the internal electrodes. Such a capacitor has stable capacitance at any ambient temperature and has high reliability in a high-temperature environment.

A capacitor according to one or more embodiments of the present disclosure will now be described with reference to the drawings. The capacitor according to one or more embodiments of the present disclosure is not limited to the capacitors in the specific embodiments described below. The capacitor according to one or more embodiments of the present disclosure may be in various forms without departing from the spirit or the scope of the general idea defined by the appended claims.

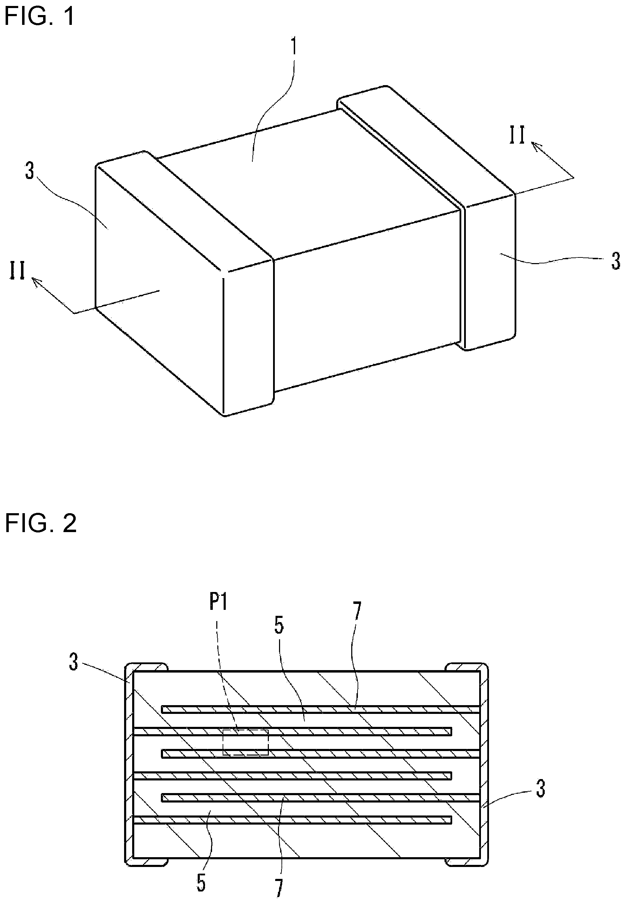

FIG. 1 is an external perspective view of a capacitor. FIG. 2 is a cross-sectional view taken along the section line in FIG. 1. In an embodiment of the present disclosure, a capacitor 100 includes a stack 1 and external electrodes 3 on surfaces of the stack 1. The stack 1 includes dielectric layers 5 and internal electrode layers 7 that are stacked alternately. In the present embodiment, the stack 1 is, for example, a rectangular prism and includes the dielectric layers 5 and the internal electrode layers 7 both being rectangular in a plan view in the stacking direction. Each internal electrode layer 7 has one side exposed on one side surface of the stack 1. The external electrodes 3 covering the side surfaces of the stack 1 are electrically connected to the internal electrode layers 7. Although FIG. 2 illustrates a stack of several dielectric layers 5 and several internal electrode layers 7 to simplify the drawing, the stack 1 may include, for example, several hundred dielectric layers 5 and several hundred internal electrode layers 7.

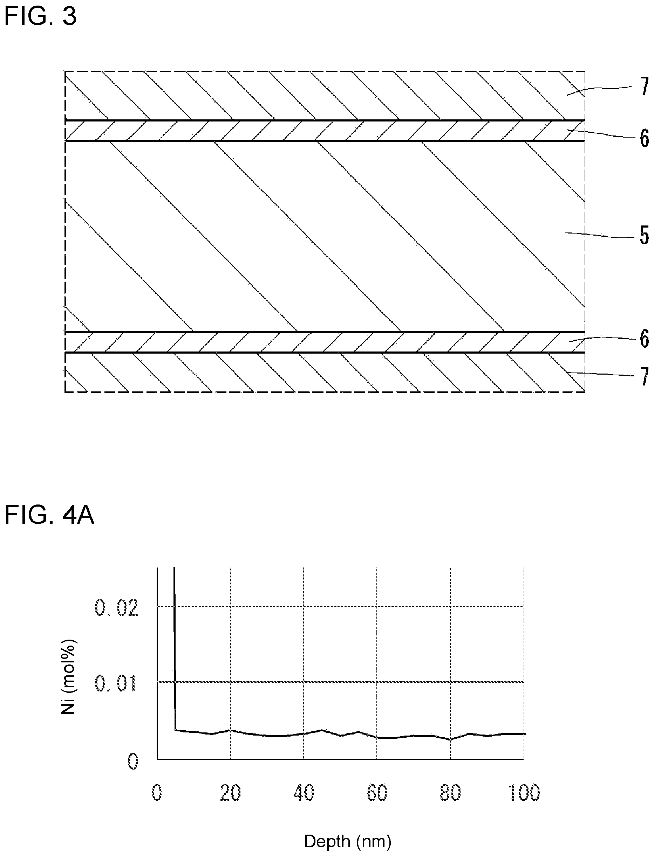

FIG. 3 is an enlarged schematic cross-sectional view of a dielectric layer. Each dielectric layer 5 includes, for example, crystal grains containing a titanate. The crystal grains may include a dielectric component containing a titanate as a main component. The main component herein refers to a component with the highest content in the crystal grains. The crystal grains containing a titanate as a main component thus refer to the crystal grains having a higher content of a titanate than other components. Examples of the titanate include, for example, barium titanate, magnesium titanate, and lanthanum titanate. The titanate may be a mixture of two or more of these titanates. Barium titanate with a high dielectric constant can increase the capacitance of the capacitor 100.

Crystal grains containing a titanate have a mean grain size of, for example, 0.1 to 0.5 µm. The mean grain size of the crystal grains is measured with, for example, the procedure described below. The fracture cross section of a sample, which is the stack 1 after being fired, is first polished. The internal structure of the polished sample is then photographed using a scanning electron microscope. On the photograph, a circle surrounding 50 to 100 crystal grains is drawn, and the crystal grains within the circle and on the circumference of the circle are selected. Subsequently, the outline of each crystal grain included in the area is extracted to determine the cross-sectional area of the crystal grain using a known image analysis program. The circular equivalent diameter of each crystal grain is calculated based on the determined cross-sectional area to determine the mean grain size of the crystal grains.

The internal electrode layers 7 are made of a conductive component such as a metal material. Examples of the conductive component include nickel (Ni), copper (Cu), palladium (Pd), and silver (Ag). An alloy containing one or more of such metal materials may also be used. The external electrodes 3 may include the same or similar metal material to the internal electrode layers 7.

In the present embodiment, the stack 1 further includes intermediate layers 6 each between a dielectric layer 5 and an internal electrode layer 7. The intermediate layers 6 contain the dielectric component of the dielectric layers 5 and the conductive component of the internal electrode layers 7. Each intermediate layer 6 has a concentration gradient in which the concentration of the conductive component decreases from a portion adj acent to the internal electrode layers 7 to a portion adjacent to the dielectric layer 5. A layer with its components having a concentration gradient, such as the intermediate layers 6, is referred to as a gradient layer. In the intermediate layers 6, the concentration of the conductive component gradually changes in the thickness direction. Each intermediate layer 6 has the concentration of the conductive component highest near the internal electrode layer 7 and lowest near the dielectric layer 5.

In the stack 1, the conductive component contained in the internal electrode layers 7 migrates into the dielectric layers 5 to form portions containing the dielectric component of the dielectric layers 5 and the conductive component of the internal electrode layers 7. Typically, the conductive component migrating into the dielectric layers 5 is, for example, uniformly or nonuniformly contained in the dielectric layers 5. The diffused conductive component has a low concentration. In the present embodiment, as described above, the intermediate layers 6 are gradient layers with a concentration gradient of the conductive component. The intermediate layers 6 reduce thermal stress between the dielectric layers 5 and the internal electrode layers 7 in a high-temperature environment. This thus allows the capacitor 100 to have high resistance to thermal shock and improves the reliability of the capacitor 100 in a high-temperature environment.

Each intermediate layer 6 has a thickness of 0.04 to 0.2 µm. With the thickness exceeding 0.2 µm, the intermediate layers 6 can have a higher conductive component content. The conductive component of the internal electrode layers 7 may thus be reduced to reduce the continuity of the internal electrode layers 7 and may reduce the capacitance.

The conductive component content of each intermediate layer 6 is 0.005 to 0.035 mol%. More specifically, the conductive component content in the portion of the intermediate layer 6 near the internal electrode layer 7 with the highest conductive component concentration is, for example, 0.035 mol% at maximum, and the conductive component content in the portion of the intermediate layer 6 near the dielectric layer 5 with the lowest conductive component concentration is, for example, 0.005 mol% at minimum. The intermediate layer 6 has any concentration gradient of the conductive component in a range of 0.005 to 0.035 mol%. For example, the intermediate layer 6 may have a concentration gradient with the conductive component content near the internal electrode layer 7 being 0.015 mol% and the conductive component content near the dielectric layer 5 being 0.005 mol%. For example, the intermediate layer 6 may have a concentration gradient with the conductive component content near the internal electrode layer 7 being 0.02 mol% and the conductive component content near the dielectric layer 5 being 0.01 mol%. For example, the intermediate layer 6 may have a concentration gradient with the conductive component content near the internal electrode layer 7 being 0.035 mol% and the conductive component content near the dielectric layer 5 being 0.02 mol%.

In the example described below, the dielectric component of the dielectric layers 5 is barium titanate, and the conductive component of the internal electrode layers 7 is nickel. Each intermediate layer 6 contains barium titanate and nickel and has a concentration gradient with the concentration of nickel decreasing from a portion adjacent to the internal electrode layer 7 to a portion adjacent to the dielectric layer 5. For example, nickel is known to diffuse into barium titanate during firing, but in a small amount. In firing, the stack 1 undergoes heat treatment in an oxidizing atmosphere before undergoing known heat treatment (firing) in a reducing atmosphere. With this procedure, nickel with a high concentration is found in barium titanate. The mechanism remains largely unknown, but seems to be as described below. Nickel thermally treated in an oxidizing atmosphere is partially oxidized to be nickel oxide. The nickel oxide has a higher affinity for unsintered barium titanate than nickel and thus migrates into barium titanate. The subsequent heat treatment in the reducing atmosphere causes sintering of barium titanate and reduces nickel oxide to nickel. The resultant stack 1 includes the intermediate layers 6 with a concentration gradient of nickel between the dielectric layers 5 and the internal electrode layers 7.

The thickness, the nickel content, and the degree of the concentration gradient of the intermediate layers 6 depend on the depth or amount of nickel oxide migrating into barium titanate, and thus can be controlled by adjusting the composition of the atmosphere gas, heat treatment temperature, and heat treatment duration of heat treatment in the oxidizing atmosphere. In the heat treatment, the oxygen partial pressure of the atmosphere gas component can control the atmosphere to be either an oxidizing atmosphere in which nickel can oxidize or a reducing atmosphere in which nickel oxide is reduced or nickel does not oxidize. The oxygen partial pressure of the atmosphere gas component is determined by the partial pressure of a hydrogen gas and a water vapor gas in the atmosphere gas. A higher ratio of a hydrogen gas to a water vapor gas in the atmosphere gas decreases the oxygen partial pressure. A higher temperature of the atmosphere gas increases the oxygen partial pressure. For the oxygen partial pressure of the atmosphere gas higher than the equilibrium oxygen partial pressure of nickel, the atmosphere is an oxidizing atmosphere in which nickel can oxidize. For the oxygen partial pressure of the atmosphere gas lower than the equilibrium oxygen partial pressure of nickel, the atmosphere is a reducing atmosphere in which nickel is reduced.

When, for example, the ratio of a hydrogen gas to a water vapor gas (H₂/H₂O) in the atmosphere gas is 1/2000 and the temperature is 700 to 800 °C, the oxygen partial pressure of the atmosphere gas is higher than the equilibrium oxygen partial pressure, thus forming an oxidizing atmosphere. Heat treatment in such an oxidizing atmosphere causes nickel to oxidize and migrate into the unsintered barium titanate. The ratio of a hydrogen gas to a water vapor gas (H₂/H₂O) in the atmosphere gas may then be changed to, for example, 1/20, and the temperature to 800 °C or higher. The oxygen partial pressure of the atmosphere is then lower than the equilibrium oxygen partial pressure, thus forming a reducing atmosphere. In the reducing atmosphere, the sintering of barium titanate and the reduction of nickel oxide proceed. The stack 1 including the intermediate layers 6 is then obtained.

The above mechanism also applies to other conductive components, other than nickel described above. The oxidizing atmosphere and the reducing atmosphere of a conductive component such as copper may be controlled by adjusting the oxygen partial pressure of the atmosphere gas and the equilibrium oxygen partial pressure of copper.

A method for manufacturing the capacitor according to the present embodiment will now be described.

A dielectric powder is first mixed with an organic resin such as a polyvinyl butyral resin and a solvent such as toluene and alcohol using a ball mill to prepare ceramic slurry. The ceramic slurry is then shaped into ceramic green sheets on a substrate using a sheet shaping method such as doctor blading or die coating. The thickness of the ceramic green sheets may be 0.8 to 1.5 µm to cause the dielectric layers 5 to be thinner for higher capacitance and to maintain high insulation.

The dielectric material for the stacked ceramic capacitor is determined in accordance with intended dielectric properties. Examples of the dielectric material include barium titanate (BaTiO₃, hereafter, a BT powder), a Ba₁₋ₓCaₓTiO₃ powder (x = 0.01 to 0.1, hereafter, a BCT powder) or a Ba₁ₓSrₓTiO₃ powder (x = 0.01 to 0.1, hereafter, a BST powder) in the form of a solid solution in which an alkaline earth element such as calcium or strontium is located at barium sites, and a Ba₁₋ₓCaₓTi₁-_{y}Zr_{y}O₃ powder (x = 0.01 to 0.1, y = 0.05 to 0.5, hereafter, a BCTZ powder) in the form of a solid solution in which calcium is located at barium sites of barium titanate and zirconium is located at titanium sites of barium titanate.

Of the powders, the BT powder allows manufacture of a stacked ceramic capacitor having a relatively small change rate of capacitance in a wide temperature range including room temperature. The BT powder may have a Ba-Ti mole ratio of 1.001 to 1.009 and a mean particle size of 0.1 to 0.2 µm. This facilitates thinning of the dielectric layers 5. The BT powder treated under the firing conditions (described later) allows manufacturing a stacked ceramic capacitor that has a longer high-temperature operating life.

The dielectric powder used for manufacturing the stacked ceramic capacitor according to the present embodiment may be a barium titanate powder containing a predetermined amount of a sintering aid such as a glass powder. The glass powder contains vanadium, magnesium, a rare earth element (RE), manganese, and SiO₂ as main components. With these powders, a capacitor having a longer high-temperature life and high capacitance per unit volume can be obtained.

For example, a V₂O₅ powder, a MgO powder, and at least one oxide powder of a RE selected from the group consisting of a Y₂O₃ powder, a Dy₂O₃ powder, a Ho₂O₃ powder, and a Yb₂O₃ powder, and a powder containing manganese (a MnCO₃ powder in this example) are added to a BT powder with a purity of 99.9% or higher, a Ba-Ti mole ratio of 1.001 to 1.009, and a mean particle size of 0.1 to 0.2 µm. In this case, 0.03 to 0.08 moles of the V₂O₅ powder, 0.9 to 1.1 moles of the MgO powder, 0.4 to 0.6 moles of at least one oxide powder of the RE selected from the group consisting of the Y₂O₃ powder, the Dy₂O₃ powder, the Ho₂O₃ powder, and the Yb₂O₃ powder, and 0.2 to 0.3 moles of the powder containing manganese may be added to 100 moles of the BT powder.

Subsequently, a glass powder containing SiO₂ as a main component is added to the BT powder containing the V₂O₅ powder, the MgO powder, the oxide powder of the RE, and the powder containing manganese in the ranges described above. The resultant powder mixture is mixed with an organic binder and a solvent to form ceramic slurry.

The glass powder used contains SiO₂, BaO, CaO, and Li₂O as main components. The glass powder contains 0.15 to 0.70 moles of BaO, 0.15 to 0.70 moles of CaO, and 0.05 to 0.45 moles of Li₂O for 1 mole of SiO₂.

The purity of these raw reagents may be 99.5% or higher to reduce impurities in sintered bodies to be the resultant dielectric layers 5 and to obtain a high dielectric property.

Subsequently, rectangular internal electrode patterns are printed and formed on the surfaces of the resultant ceramic green sheets. A conductive paste to be the internal electrode patterns is prepared by mixing Ni or its alloy powder as a main component metal with a ceramic powder as a co-material (in this case, the BT powder or the dielectric powder used for the ceramic green sheets), and adding an organic binder, a solvent, and a dispersant to the mixture. To avoid the internal electrode patterns to have steps on the ceramic green sheets, ceramic patterns surrounding the internal electrode patterns may be formed to have substantially the same thickness as the internal electrode patterns. In this case, the ceramic component contained in the ceramic patterns may be the dielectric powder used for the ceramic green sheets to have the same firing shrinkage in co-firing.

Subsequently, a predetermined number of ceramic green sheets with the internal electrode patterns are stacked. A predetermined number of ceramic green sheets without internal electrode patterns are then placed on each of the upper surface and the lower surface of the stack of sheets to form a preliminary stack. The internal electrode patterns in the preliminary stack are staggered by half the pattern in the longitudinal direction. This stacking method allows the internal electrode patterns to be alternately exposed on the end faces of the stack after cutting.

In the present embodiment, the stacked ceramic capacitor is formed by preforming the internal electrode patterns on main surfaces of the ceramic green sheets and then stacking the ceramic green sheets together. In some embodiments, the stacked capacitor may be formed by first laminating a ceramic green sheet to a lower base member, then printing the internal electrode pattern onto the sheet and drying the pattern, and then placing and preliminarily laminating a ceramic green sheet without the internal electrode pattern onto the printed, dried internal electrode pattern. Such lamination of ceramic green sheets and printing of internal electrode patterns are sequentially performed.

The preliminary stack is then pressed at a temperature and a pressure higher than the temperature and the pressure at the stacking process to form a compact in which the ceramic green sheets and the internal electrode patterns are firmly laminated together. The compact is cut into a grid pattern to obtain stacks (prefired) with the ends of the internal electrode patterns being exposed.

The prefired stacks are then fired under predetermined firing conditions to obtain stacks 1. In some cases, each stack 1 may have the edges chamfered and be barrel-polished to expose the internal electrode layers 7 at the opposite end faces of the stack 1. The firing conditions include thermally treating the stacks in an oxidizing atmosphere with an atmosphere gas composition and temperature conditions that allow an oxygen partial pressure to be higher than the equilibrium oxygen partial pressure of nickel and then changing the atmosphere gas composition and the temperature conditions of the atmosphere gas to fire the stacks in a reducing atmosphere.

An external electrode paste is then applied to the opposite ends of each stack 1 and baked to form the external electrodes 3. In some cases, the surfaces of the external electrodes 3 are plated to enhance mountability. This completes the capacitor according to the present embodiment.

### Examples

A method for manufacturing capacitors in examples will now be described. For the barium titanate raw material powder, a raw material powder with a purity of 99.9%, a mean particle size of 0.2 µm, and a Ba-Ti mole ratio of 1.005 was prepared. Dysprosium, or more specifically, Dy₂O₃ was added to the raw material as a rare earth element. A calcium carbonate powder (CaCO₃), a manganese carbonate powder (MnCO₃), and a glass powder (containing SiO₂, BaO, CaO, and Li₂O as main components) were also used as other additives. A mixed solvent of toluene and alcohol was added to wet-blend these powders using zirconia balls with a diameter of 5 mm.

Subsequently, the wet-blended powder was placed into a mixed solvent of toluene and alcohol in which polyvinyl butyral resin was dissolved. The powder was wet-blended using zirconia balls with a diameter of 5 mm to prepare ceramic slurry. The prepared ceramic slurry was then used to form ceramic green sheets with a thickness of about 3 µm on a film for forming the green sheets by doctor blading.

A metal paste as a metal containing a nickel powder was used for forming internal electrode layers. Ethylcellulose as a resin was used for preparing the metal paste. A mixture of a dihydroturpineol solvent and butyl cellosolve was used as a solvent.

The metal paste was printed on the ceramic green sheets to obtain green sheets with the metal paste. Subsequently, 400 green sheets with the metal paste were stacked. Ceramic green sheets as cover layers were placed on the upper surface and the lower surface of the stack of sheets to form a compact. The compact was then cut into stacks to undergo firing.

The firing process was performed under the following conditions. In the firing process, the stacks were thermally treated in an oxidizing atmosphere and then fired in a reducing atmosphere. Different oxidation atmospheres allow capacitors in examples 1 to 4 to have different concentration gradients in their intermediate layers. More specifically, the heat treatment duration in the oxidizing atmosphere was set to 20 minutes, and the temperature conditions and the component ratios (ratio of the hydrogen gas to the water vapor gas or H₂/H₂O) were varied as shown in Table 1. The conditions for the firing process in the reducing atmosphere were common to examples 1 to 4. More specifically, the temperature condition was set to a maximum temperature of 1200 °C retained for 30 minutes, and the ratio of the hydrogen gas to the water vapor gas (H₂/H₂O) was set to 1/10. The resultant stacks each had the dimensions of 2.0 × 1.25 × 1.25 mm.

After the resultant stacks 1 were barrel-polished, an external electrode paste was applied to the two ends of each stack 1. The stacks were then thermally treated at 800 °C to form external electrodes. The external electrode paste containing a Cu powder and glass was used. The surfaces of the external electrodes were then plated with Ni and then Sn using an electrolytic barrel machine to complete the capacitors. The resultant capacitors have a designed capacitance value of 10.0 µF.

The capacitors in a comparative example were manufactured in the same manner as the capacitors in the working examples except the firing process. In the comparative example, the stacks were not thermally treated in an oxidizing atmosphere, but were fired in a reducing atmosphere alone in the firing process.

The thermal shock resistance of each capacitor was evaluated by testing its resistance to soldering heat. In the soldering heat resistance test, the capacitors in examples 1 to 4 and the comparative example (100 capacitors in each example) were placed in a solder bath maintained at 305 °C for 5 seconds and then removed from the bath. The number of capacitors with cracks was counted. Table 1 shows the number of cracking capacitors/the number of capacitors placed in the bath.

For the intermediate layers, the thickness, the concentration near the internal electrode layers (maximum concentration), and the concentration near the dielectric layers (minimum concentration) were measured. The measurement was performed as described below. The internal electrode layers in examples 1 to 4 were separated from the capacitors to prepare separated samples with the intermediate layers being exposed. The internal electrode layers were electrochemically separated from the capacitors by dissolving nickel to completely remove the internal electrode layers on the surfaces of the intermediate layers. Nickel was quantified in the depth direction from the surfaces of the intermediate layers in the separated samples using secondary-ion mass spectrometry (SIMS). The measurement conditions of SIMS are described below. For the comparative examples, the nickel concentrations of the dielectric layers were measured by SIMS in the same or similar manner.

The measurement results are shown in Table 1.
Analysis method: Time-of-flight secondary ion mass spectrometry (ToF-SIMS)
Analyzer: PHI nano ToF II (ULVAC-PHI), Primary ion: Bi cluster ion
Measurement area: 100 µm square
Depth sputtering: Ar ions, 4 keV

**Table 1**

| | Temperature condition (°C) | Composition ratio | Intermediate layer thickness (nm) | Maximum concentration (mol%) | Minimum concentration (mol%) | Soldering heat resistance test |
|---|---|---|---|---|---|---|
| Comparative example | - | - | - | 0.003 | 0.003 | 15/100 |
| Example 1 | 600-700 | 1/2000 | 40 | 0.015 | 0.005 | 3/100 |
| Example 2 | 700-800 | 1/2000 | 60 | 0.02 | 0.01 | 1/100 |
| Example 3 | 700-800 | 1/20000 | 100 | 0.025 | 0.015 | 1/100 |
| Example 4 | 900-1000 | 1/2000 | 200 | 0.035 | 0.02 | 1/100 |

The results of the soldering heat resistance test shown in Table 1 indicate that much fewer capacitors had cracks in examples 1 to 4 than in the comparative example. The capacitors in examples 1 to 4 have high thermal shock resistance. For the capacitors in examples 1 to 4, the thickness of the intermediate layers, the maximum concentration, and the minimum concentration were all different. This indicates that the intermediate layers can be controlled by adjusting the conditions of the oxidizing atmosphere. In the comparative example, the nickel concentrations of the dielectric layers 5 were lower than the minimum concentration in the working examples, and no change in the concentration was observed in the thickness direction of the dielectric layers.

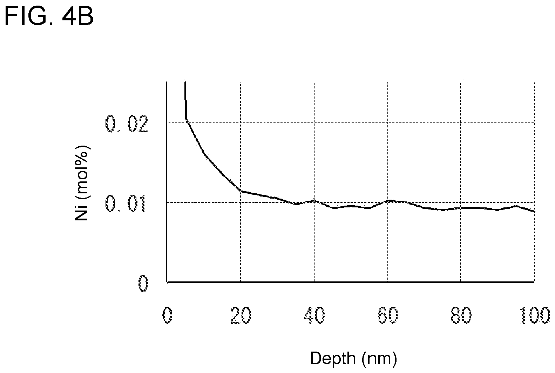

Examples of the results of SIMS measurements are shown in FIGs. 4A and 4B. FIG. 4A shows the measurement results in the comparative example. FIG. 4B shows the measurement results in example 2. In the graphs in FIGs. 4A and 4B, the vertical axis represents the amount of nickel (mol%), and the horizontal axis represents the depth (nm) from the sample surface. In the comparative example, the amount of nickel was constant at 0.003 mol% for any depth. In example 2, the amount of nickel decreased at greater depths, indicating formation of an intermediate layer with a concentration gradient.

The present disclosure may be implemented in the following forms.

In one or more embodiments of the present disclosure, a capacitor includes a stack including a dielectric layer and an internal electrode layer alternately stacked on each other, and an external electrode located on a surface of the stack and electrically connected to the internal electrode layer. The stack further includes an intermediate layer between the dielectric layer and the internal electrode layer. The intermediate layer contains a dielectric component of the dielectric layer and a conductive component of the internal electrode layer. The intermediate layer has a concentration gradient in which a concentration of the conductive component decreases from a portion adjacent to the internal electrode layer to a portion adjacent to the dielectric layer.

The capacitor according to one or more embodiments of the present disclosure can have improved reliability in a high-temperature environment.

Although one or more embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

- 1: stack
- 3: external electrode
- 5: dielectric layer
- 6: intermediate layer
- 7: internal electrode layer
- 100: capacitor

## Claims

1. A capacitor, comprising:
a stack including a dielectric layer and an internal electrode layer alternately stacked on each other; and
an external electrode located on a surface of the stack and electrically connected to the internal electrode layer,
wherein the stack further includes, between the dielectric layer and the internal electrode layer, an intermediate layer comprising a dielectric component of the dielectric layer and a conductive component of the internal electrode layer, and the intermediate layer has a concentration gradient in which a concentration of the conductive component decreases from a portion adjacent to the internal electrode layer to a portion adjacent to the dielectric layer.

2. The capacitor according to claim 1, wherein
the dielectric component comprises barium titanate, and
the conductive component comprises nickel.

3. The capacitor according to claim 1 or claim 2, wherein
the intermediate layer has a thickness of 0.04 to 0.2 µm.

4. The capacitor according to any one of claims 1 to 3, wherein
the intermediate layer has a content of the conductive component of 0.005 to 0.035 mol%.
